# EUROPÄISCHE PATENTSCHRIFT

(11) **EP 1 849 891 B1**
(45) Veröffentlichungstag und Bekanntmachung des Hinweises auf die Patenterteilung: **16.02.2011**
(21) Anmeldenummer: 06113331.0
(22) Anmeldetag: 28.04.2006
(51) Int. Cl.: C23C 18/16, C25D 21/12, B65G 49/04

(54) **Galvanotechnische Anlage mit Fördereinrichtung zur Gestellbewegung**
Galvanic plant with conveying device for the movement of the rack
Installation galvanique avec dispositif convoyeur pour le mouvement du cadre

(43) Veröffentlichungstag der Anmeldung: 31.10.2007
(73) Patentinhaber: Franz, Wolf-Dieter, 82538 Geretsried (DE)
(72) Erfinder: Franz, Wolf-Dieter, 82538 Geretsried (DE)
(74) Vertreter: Szynka, Dirk

(56) Entgegenhaltungen:
- GB-A- 1 350 405
- GB-A- 1 403 927
- US-A- 2 945 579
- PATENT ABSTRACTS OF JAPAN Bd. 007, Nr. 074 (M-203), 26. März 1983 (1983-03-26) & JP 58 002124 A (FUJI KAKI KOUJI KK; others: 01), 7. Januar 1983 (1983-01-07)

## Beschreibung

Die vorliegende Erfindung betrifft die galvanotechnische Behandlung von Werkstücken. Damit ist neben der eigentlichen galvanischen, also elektrochemischen, Beschichtung und Reinigung oder anderweitigen Behandlung von Werkstücken beziehungsweise deren Oberflächen auch die außenstromlose Beschichtung, Reinigung oder anderweitige Behandlung umfasst. Solche Prozesse werden in einschlägigen Betrieben der Galvanotechnik durchgeführt und dienen insbesondere zur Herstellung optisch dekorativer, korrosionsbeständiger, besonders glatter oder in anderer Weise ausgezeichneter Oberflächen. Die Prozesse können auch zur Vorbereitung weiterer Oberflächenbeschichtungen oder -behandlungen dienen.

Galvanotechnische Anlagen zur automatisierten Durchführung solcher Verfahren, verfügen gewöhnlich über eine Mehrzahl Wannen für galvanotechnische Bäder und über so genannte Gestelle, in denen die Werkstücke aufgenommen und in die Bäder eingebracht sowie wieder aus den Bädern entnommen werden. Bei den Gestellen kann es sich beispielsweise um rahmenartige Konstruktionen mit einer größeren Zahl von Befestigungseinrichtungen für kleinere Werkstücke handeln, die, etwa manuell, mit Werkstücken bestückt werden und dann mit der Werkstückbestückung den galvanotechnischen Prozess durchlaufen.

Für die Bewegungen der Gestelle mit den Werkstücken in die Bäder, aus den Bädern heraus und von einem Bad zum nächsten werden angetriebene Fördereinrichtungen eingesetzt, die die Gestelle aufnehmen, halten und durch den Prozess bewegen können. Da die Gestelle regelmäßig in die Bäder abgesenkt und aus ihnen heraus angehoben werden müssen, kommen dabei vertikale Bewegungskomponenten vor.

Die Leistungsfähigkeit einer galvanotechnischen Anlage und eines entsprechenden galvanotechnischen Verfahrens sind u.a. auch durch die Leistungsfähigkeit einer solchen Fördereinrichtung bestimmt.

In der US A 2 945 579 wird eine Transport- und Hebevorrichtung gezeigt, mit der Gestelle zum Tragen von Werkstücken horizontal entlang von Bädern und vertikal zum Absenken in die Bäder und Anheben aus den Bädern bewegt werden können. Dabei können die Werkstücke unterschiedlich lange in den einzelnen Bädern verweilen; eine minimale Ruhezeit wird dabei nicht unterschritten.

Die GB A 1 403 927 zeigt eine Transportvorrichtung, bei der Gestelle von einem Bad zum nächsten mittels Schwenken von um jeweils eine Achse drehbaren Armen transportiert werden. Die Gestelle können auch hier unterschiedlich lange in den Bädern verweilen. Die minimale Stoppdauer eines Gestells in einem Bad entspricht der Dauer, die ein Arm braucht, um von einem Bad zum nächsten zu schwingen.

Insbesondere beim Anheben von länglichen Werkstücke können diese ungewollt heftig hin- und herschwingen. In der JP 58 002124 A ist ein senkrecht zu den länglichen Werkstücken angeordneter Balken gezeigt, welcher beim Anheben der Werkstücke an diese angelegt wird, um ein Schwingen einzuschränken.

Die GB A 1 350 405 zeigt eine galvanotechnische Anlage, bei der Gestelle an einem horizontal und vertikal beweglichen Haken aufgehängt sind und die Bewegung des Hakens und der Gestelle beim Absenken in ein Bad und beim Anheben aus dem Bad eine Überlagerung aus horizontalen und vertikalen Bewegungskomponenten umfasst, um im Anschluss an das Absenken des Gestells in das Bad dieses von dem Haken abzuhängen und beim Aufnehmen wieder anzuhängen.

Der Erfindung liegt das Problem zugrunde, ein galvanotechnisches Verfahren und eine galvanotechnische Anlage anzugeben, die im Hinblick auf die Bewegung der Gestelle durch die Fördereinrichtung verbessert sind.

Die Erfindung richtet sich auf ein Verfahren zur galvanotechnischen Behandlung von Werkstücken mit einer galvanotechnischen Anlage, welche aufweist: Wannen für galvanotechnische Bäder, Gestelle zur Aufnahme der Werkstücke und eine Fördereinrichtung zur Bewegung der Gestelle mit den Werkstücken in die und aus den Bädern mit vertikalen Bewegungskomponenten, wobei, wenn die Gestelle abgesetzt werden, diese vor dem Absetzen zur Begrenzung des Schlags etwas abgebremst werden, dadurch gekennzeichnet, dass die Gestelle mit der Fördereinrichtung in eines der Bäder mit jeweils einer vertikalen Bewegungskomponente der Gestelle abgesenkt und pausenzeitfrei wieder aus dem Bad angehoben werden, nämlich mit einer vernachlässigbaren Pausenzeit von maximal 10 % der Zeit zwischen dem Beginn des Absenkens der Gestelle in das Bad und dem Ende des Anhebens aus diesem Bad, wobei die Gestelle lediglich vertikal bewegt werden, so lange sich ein Teil des jeweiligen Gestells in dem Bad befindet.

Bevorzugte Merkmale der Erfindung sind ferner in den abhängigen Ansprüchen angegeben und werden im Folgenden näher erläutert. Die Offenbarung bezieht sich dabei durchweg auf beide Kategorien, das erfindungsgemäße Verfahren und die erfindungsgemäße Anlage, ohne das zwischen diesen im Einzelnen noch explizit unterschieden wird.

Die Erfinder sind davon ausgegangen, dass die Leistungsfähigkeit der galvanotechnischen Bearbeitung weitgehend von der Geschwindigkeit der Bewegung der Gestelle abhängt. Dies betrifft zunächst den Durchsatz der Anlage in Gestellen oder Werkstücken pro Zeiteinheit.

Viele galvanotechnische Bäder erfordern eine gewisse Verweilzeit zur Vollendung von etwa chemischen (außenstromlosen) bzw. elektrochemischen Prozesse, welche zur Behandlung der Werkstücke durchgeführt werden sollen. Andere zu einem galvanotechnischen Verfahren gehörende Bäder wiederum benötigen keine Verweilzeit der Werkstücke in den Bädern. Dies gilt etwa für Wasserbäder zum Abspülen der Werkstücke.

Die Erfindung basiert auf der Idee, die Werkstücke in Bädern, in denen keine Verweilzeit notwendig ist, auch nicht verweilen zu lassen. Dies kann für eine galvanotechnische Anlage mit mehreren Bädern bedeuten, dass die Werkstücke in einigen der Bäder eine gewisse Zeit verweilen, in anderen wiederum nicht. In dem letztgenannten Fall werden die Gestelle mit der Fördereinrichtung in das Bad mit jeweils einer vertikalen Bewegungskomponente abgesenkt und pausenzeitfrei wieder aus dem Bad angehoben.

Bei einer idealen technischen Realisierung bedeutet dies, dass die Bewegung des Gestells in vertikaler Richtung zwischen dem Absenken in das Bad und dem Anheben aus demselben wirklich nur für einen Zeitpunkt zum Stehen kommt. Der Begriff "pausenzeitfrei" soll allerdings auch technische Lösungen umfassen, bei denen das Gestell nicht nur für einen Zeitpunkt im mathematischen Sinne, sondern auch für ein kurzes Zeitintervall zum Stehen kommt. Die Länge dieses Zeitintervalls beträgt maximal 10% der Zeit zwischen dem Beginn des Absenkens der Gestelle in das Bad (also dem Beginn der vertikalen Bewegung auf das Bad zu) und dem Ende des Anhebens aus diesem Bad (Verschwinden der von dem Bad weg gerichteten vertikalen Geschwindigkeitskomponente). Zunehmend bevorzugt sind Zeitintervalle, bei denen die Pausenzeit lediglich bis zu 5% bzw. 1% des eben angegebenen Zeitraums einnehmen.

Vorzugsweise werden sämtliche Werkstücke an den Gestellen auch vollständig in das bzw. die Bäder eingetaucht, aus denen die Gestelle pausenzeitfrei wieder angehoben werden. Ein vollständiges Eintauchen der Gestelle ist jedoch nicht notwendig.

Vorzugsweise ist das Bad bzw. sind die Bäder, in die die Gestelle pausenzeitfrei eingetaucht werden, Wasserbäder zum Spülen der Werkstücke. Im Falle von Wasserbädem bietet sich ein pausenzeitfreies Eintauchen besonders an, da Abspülen ein physikalischer Prozess ist und keine Zeit (auf der hier relevanten Zeitskala) benötigt wie dagegen chemische bzw. elektrochemische Prozesse.

Oft ist oberhalb der Gestelle ein Querbalken angebracht, mit dem die Gestelle auf eine Absetzvorrichtung der Wannen abgesetzt werden können. Im einfachsten Fall ist die Absetzvorrichtung der Wannenrand und die Balken werden einfach auf den Wannenrand gelegt. Dies ist sinnvoll bei Bädern, welche eine gewisse Verweilzeit der Werkstücke erfordern. Sind die Gestelle mit dem Balken einmal abgelegt, so müssen die Position und die Höhe der Gestelle nicht mehr durch die Fördereinrichtung (aktiv) gehalten werden. Im Fall von Bädern, bei denen erfindungsgemäß auf eine Verweilzeit der Werkstücke in den Bädern verzichtet werden soll, ist es bevorzugt, solche Balken nicht auf den entsprechenden Wannen abzusetzen, denn jedes Absetzen würde den Fluss der Absenk- und Anhebebewegung stören und die Verweilzeit der Gestelle in dem Bad zumindest um die Absetzzeit verlängern. Weiter führt jedes nicht vorsichtig durchgeführte Absetzen zu einer Erschütterung der Gestelle und der Werkstücke.

Bei der Erfindung werden die Gestelle beim pausenzeitfreien Absenken und Anheben lediglich vertikal bewegt, solange sich ein Teil des jeweiligen Gestells in einem entsprechenden Bad befindet. Eine Überlagerung mit horizontalen Bewegungskomponenten ist kritisch, solange sich die Gestelle noch in dem Bad befinden, da das Gestell aufgrund des Flüssigkeitswiderstandes innerhalb des Bades zunächst noch in horizontaler Richtung gebremst wird, beim Verlassen des Bades jedoch nicht mehr. Dies kann zu unerwünschten Pendelbewegungen der Gestelle führen. Auch sind die Wannen für die galvanotechnischen Bäder häufig so eng ausgelegt, dass man beim Absenken der Gestelle in die Bäder nicht lange eine horizontale Bewegungskomponente beibehalten kann und beim Anheben der Gestelle nicht zu früh wieder eine hinzufügen sollte.

Vorzugsweise sind die vertikalen Geschwindigkeitskomponenten der Gestelle bei einem erfindungsgemäßen pausenzeitfreien Eintauchen zwischen dem Absenken der Gestelle und dem darauf folgenden Anheben glatt. Zu dem Wort "glatt" selber und zu den Vorteilen einer glatten Bewegung s. unten.

Es ist bevorzugt, die Fördereinrichtung mit einer Steuerung zu steuern, welche dazu in der Lage ist, aus den bisher ausgegebenen Steuersignalen zumindest approximativ die vertikale Position der Gestelle über den Bädern zu berechnen. Basierend auf diesen berechneten Höhen kann dann etwa das Abbremsen des Absenkens und das Anheben der Gestelle erfindungsgemäß eingeleitet werden.

Alternativ oder ergänzend dazu kann die Fördereinrichtung einen Zwischerlschalter aufweisen. Üblicherweise sind die Gestelle jeweils an einer Aufhängung in der Fördereinrichtung aufgehängt. Passiert und schaltet etwa eine solche Aufhängung den Zwischenschalter, so ist durch den Zwischenschalter die vertikale Position des Gestells bestimmt. Das Schalten des Zwischenschalters kann also etwa auch dazu genutzt werden, der Steuerung ein Signal zukommen zu lassen, so dass diese das Absenken der Gestelle rechtzeitig beendet und das Anheben derselben veranlasst.

Die weiteren bevorzugten Ausgestaltungen der Erfindung basieren auf der von den Erfindern festgestellten Tatsache, dass die Leistungsfähigkeit der galvanotechnischen Bearbeitung auch von der Geschwindigkeit der Bewegung der Gestelle zwischen den einzelnen Bädern abhängt. Zum einen betrifft dies auch den Durchsatz der Anlage in Gestellen oder Werkstücken pro Zeiteinheit, zum zweiten zumindest in bestimmten Fällen aber auch die Bearbeitungsqualität. Idealerweise sollte nämlich zwischen dem Aufenthalt in aufeinander folgenden Bädern möglichst wenig Zeit verstreichen, um Angriffe durch Luftsauerstoff, Kontaminationen, Rücklösevorgänge, undefinierte Behandlungszeitüberschreitungen des letzten Bades und ähnliche Phänomene zu begrenzen. Ferner zeigen folgende Ausgestaltungen weitere Möglichkeiten auf, um Erschütterungen der Gestelle und Werkstücke zu vermeiden. Als bevorzugte Ausgestaltung der Erfindung wird vorgeschlagen, die Bewegungsvorgänge nicht streng in aufeinander folgende vertikale Bewegungsschritte zu unterteilen, also einen horizontalen Bewegungsvorgang auf einen vertikalen folgen zu lassen oder umgekehrt, sondern zumindest in bestimmten Zeitbereichen gleichzeitig durchzuführen. Die horizontalen und vertikalen Bewegungskomponenten sollen also zeitlich überlappen. In anderen Worten sollen sich die Gestelle bei der Bewegung von zumindest während eines Teils der Absenkbewegung und/oder der Anhebebewegung noch/bereits wieder horizontal weiterbewegen.

Im Einzelnen können hier optimierte Bewegungsformen gefunden werden, wenn die Geometrie im Hinblick auf die Wannenabstände und die begrenzenden Wannenränder sowie die notwendigen Absenk-Tiefen bekannt ist. Auch wenn im Einzelfall nicht immer eine im eigentlichen Sinn optimierte Bewegungsform gewählt und realisiert wird, so folgt jedenfalls aus der zeitlichen Überlappung eines Teils der horizontalen und der vertikalen Bewegungen eine deutliche Zeitersparnis.

Die Fördereinrichtung kann durch eine programmierte Steuerung gesteuert werden, so dass die Bewegungsformen und -Zeitabläufe zumindest im Wesentlichen durch das entsprechende Programm vorgegeben sind. Dabei ist bevorzugt, dass das Programm einen vorgegebenen Geschwindigkeits-Zeit-Ablauf enthält, also die Vorgabe sich nicht auf Orts-Zeit-Zusammenhänge sondern auf Geschwindigkeits-Zeit-Zusammenhänge bezieht. Die Erfinder haben festgestellt, dass sich vermutlich wegen der nie ganz vermeidbaren Ortsfehler durch Spiel- und Lagerabweichungen in dieser Form leichter stabile Bewegungsabläufe programmieren und realisieren lassen.

Im Rahmen einer zumindest näherungsweise optimierten Programmierung der Bewegungsabläufe kann es dabei - oder auch bei Programmen in Form von Orts-Zeit-Zusammenhängen - von Vorteil sein, bei der Bewegung von einem Bad in das Nächste, also der Abfolge eines Anhebens, horizontalen Weiterbewegens und Senkens, eine symmetrische Bewegung vorzusehen. Geht man hier von einer horizontalen Bewegung in nur einer Richtung aus, handelt es sich also um eine zu einer Mittellinie oder Mittelebene symmetrische Bewegungsform, wobei die Mitte nicht notwendigerweise der Abstandsmitte zwischen den Wannen entsprechen muss. Im Fall zweidimensionaler horizontaler Bewegungen soll die Symmetrie zumindest in einer horizontalen Projektion vorliegen.

Die bereits erwähnten Geschwindigkeits-Zeit-Zusammenhänge können während der Realisierung des gesteuerten Bewegungsablaufs durch die Fördereinrichtung durch zusätzliche Ortsmessungen korrigiert werden. Diese Ortsmessungen sind vorzugsweise nur an einzelnen diskreten Stellen vorgesehen, also nicht kontinuierlich bewegungsbegleitend, um den Aufwand zu begrenzen. An bestimmten Orten oder zu bestimmten Zeiten werden dann die tatsächlichen Orts-Zeit-Zusammenhänge dort mit aus dem programmierten Geschwindigkeits-Zeit-Ablauf errechneten Orts-Zeit-Zusammenhängen oder -Punkten verglichen. Festgestellte Abweichungen führen zu einer Korrektur der programmierten Steuerung.

In einem bevorzugten Fall erfolgt diese Korrektur multiplikativ, also durch Einrechnen eines einfachen Korrektur-Faktors in die für einen folgenden Zeitraum für das Programm vorgegebene Geschwindigkeit in ihrer Zeitabhängigkeit. Beispielsweise könnten die Geschwindigkeiten für einen nachfolgenden Zeitraum um einen bestimmten Prozentwert reduziert werden, wenn sich das Gestell nach Feststellung durch den Vergleich bereits etwas zu weit bewegt hat. In dieser Weise lässt sich eine einfache Sicherstellung einer für die Anforderung von galvanotechnischen Anlagen ausreichenden Ortsgenauigkeit sicherstellen, obwohl die Erfindung vorzugsweise keine Orts-Zeit-Programmierung vorsieht.

Ein bevorzugter Zeitpunkt für einen solchen Vergleich zur Korrektur der Steuerung liegt am Beginn eines horizontalen Abbremsvorgangs, der mit einer gewissen Genauigkeit bei einer bestimmten Stelle enden soll. Der Korrekturfaktor kann dann in den Abbremsvorgang eingerechnet werden und damit ein Ende des Abbremsvorgangs mit relativ guter Genauigkeit an der gewünschten Stelle sicherstellen. Bevorzugt ist ferner, dass dieser Vergleich zum Korrekturvorgang ausschließlich an solchen Punkten am Beginn von Abbremsvorgängen stattfindet.

Bei einer weiteren bevorzugten Ausgestaltung der Erfindung sollen die Bewegungsvorgänge nicht nur schnell sondern auch möglichst "weich" und erschütterungsfrei erfolgen. Damit kann trotz einer relativ hohen Gesamtgeschwindigkeit der Anlage sichergestellt werden, dass der Verschleiß und das Geräuschniveau sowie die Störungshäufigkeit in Grenzen bleiben oder nach den Erfahrungen der Erfinder sogar deutlich besser als bei langsameren konventionellen Anlagen sind. Hierbei ist vorgesehen, dass die programmierten Geschwindigkeits-Zeit-Abläufe glatt sind, das heißt stetig differenzierbar. Um dies weniger mathematisch auszudrücken: die Geschwindigkeits-Zeit-Abläufe sollen knickfrei sein, um abrupte Beschleunigungswechsel zu vermeiden. Auch zur Sicherstellung eines solchen glatten Geschwindigkeits-Zeit-Ablaufs ist die direkte Programmierung von Geschwindigkeits-Zeit-Abläufen selbst, auf die bereits zuvor eingegangen wurde, von Vorteil.

Neben der Vermeidung von Stoßkräften und dem damit verbundenen Verschleiß und Geräuschniveau haben glatte und darüber hinaus möglichst "weiche" horizontale Bewegungskomponenten den Sinn, Pendelbewegungen der üblicher Weise deutlich über ihrem Schwerpunkt an der Fördereinrichtung aufgehängten Gestelle zu minimieren, die die zulässigen Geschwindigkeiten bei konventionellen Fördereinrichtungen deutlich begrenzt haben. Bislang musste nämlich beispielsweise vor dem Absenken eines Gestells in ein Bad gewartet werden, bis ein durch einen relativ abrupten Abbremsvorgang erzeugtes Pendeln des Gestells ausreichend abgeklungen war.

Dementsprechend lässt sich die Erfindung aber durchaus in günstiger Weise auch ohne glatte (stetig differenzierbare) Geschwindigkeits-Zeit-Abläufe in der vertikalen Bewegungsrichtung realisieren. Wenn die Gestelle nämlich mit einem gewissen Ruck in vertikaler Richtung beschleunigt oder abgebremst werden, so führt dies deutlich weniger zu Pendelbewegungen der Gestelle, weil der Schwerpunkt gewöhnlich unter dem Aufhänge-Punkt liegt und die entsprechenden Kräfte damit praktisch keine relevanten Auswirkungen auf Pendelbewegungen haben. Sollen die Gestelle abgesetzt werden, handelt es sich also nicht um eine erfindungsgemäße pausenzeitfreie vertikale Absenk- und Anhebebewegung der Gestelle, so wird vor dem Aufsetzen auf eine untere Endbegrenzung, beispielsweise der oben erwähnte quer verlaufende Balken auf dem Wannenrand, etwas abgebremst, um den Schlag zu begrenzen. Die vertikale Geschwindigkeitskomponente sollte beim Aufsetzen also deutlich kleiner sein als das Maximum der vertikalen Geschwindigkeitskomponente während der Absenkbewegung.

Im Folgenden wird die Erfindung anhand eines Ausführungsbeispiels näher erläutert, wobei die einzelnen Merkmale auch in anderen Kombinationen erfindungswesentlich sein können und sich auf Verfahren und Anlage beziehen.
- Figur 1: zeigt eine erfindungsgemäße galvanotechnische Anlage zur Ausfüh- rung eines erfindungsgemäßen Verfahrens.
- Figur 2: zeigt einen Ausschnitt aus der galvanotechnischen Anlage aus Figur 1 in verschiedenen Verfahrenszuständen.
- Figur 3: zeigt Geschwindigkeits-Zeit-Verläufe für die Durchführung eines erfin- dungsgemäßen Verfahrens.
- Figuren 4a - d: zeigen Orts- und Geschwindigkeits-Zeit-Verläufe gemäß einem erfin- dungsgemäßen Verfahren.

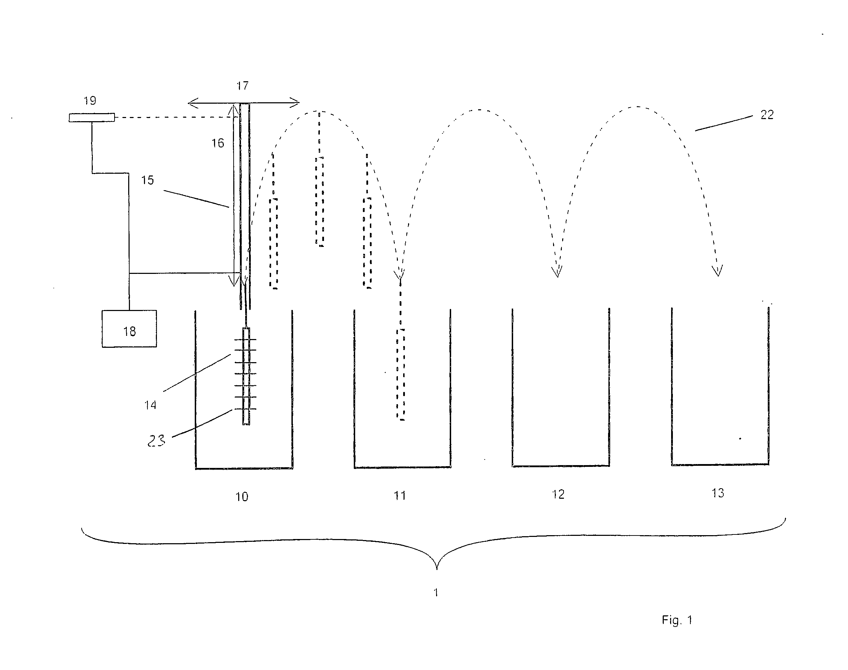

Figur 1 zeigt eine galvanotechnische Anlage 1 entsprechend einem Ausschnitt aus einer Produktionslinie.

In dieser galvanotechnischen Anlage 1 werden Werkstücke 23, hier etwa faustgroße Pumpengehäuse, mit einer Kupferschicht versehen und anschließend gespült. Die Werkstücke 23 sind über Befestigungseinrichtungen (nicht gezeigt) mit einem Gestell 14 verbunden. Das Gestell 14 ist eine rahmenartige Konstruktion mit passenden Befestigungseinrichtungen für die Werkstücke 23. Es ist in einem Transportwagen 15 aufgehängt. Der Transportwagen 15 kann das Gestell 14 über eine Aufhängung 35 in vertikaler Richtung mit einem Hub 16 bewegen. Dabei ist der Transportwagen 15 über eine Schiene (nicht gezeigt) so aufgehängt, dass er entlang dieser Schiene horizontal, entlang einer Verfahrachse 17, bewegt werden kann.

Der Übersichtlichkeit der Darstellung halber ist nur ein Gestell 14 gezeigt. Üblicherweise weisen galvanotechnische Anlagen jedoch mehrere Gestelle auf.

Die galvanotechnische Anlage 1 umfasst vier Wannen 10 - 13 mit unterschiedlichen Bädern. Die Wanne 10 enthält ein Kupferbad und die Wannen 11 - 13 enthalten jeweils ein Wasserbad zum Spülen.

Die vertikale Bewegung des Gestells 14 durch den Transportwagen 15 sowie die horizontale Bewegung des Transportwagens 15 werden durch eine programmierbare Steuerung 18 bestimmt. Die programmierbare Steuerung 18 ist über Signalleitungen 21 mit dem Transportwagen 15 verbunden.

Weiter weist die galvanotechnische Anlage 1 einen Laser 19 zur Positionsbestimmung des Transportwagens 15 auf. Über diesen Laser 19 kann die horizontale Position entlang der Verfahrachse 17 des Transportwagens 15 bestimmt werden. Der Laser 19 ist über Signalleitungen 20 mit der programmierbaren Steuerung 18 verbunden.

Der Transportwagen 15 verfügt über einen oberen und einen unteren Endschalter (nicht gezeigt). Außerdem verfügt er über einen Zwischenschalter (ebenfalls nicht gezeigt). In der höchstmöglichen Position des Gestells 14 wird der obere Endschalter geschaltet und in der tiefstmöglichen Position wird der untere Endschalter geschaltet. Passiert die Aufhängung 35 den Zwischenschalter, so wird dieser geschaltet. Das Schalten der Schalter wird der programmierbaren Steuerung 18 über die Signalleitungen 21 mitgeteilt.

Die programmierbare Steuerung 18 steuert nicht nur die Bewegungen des Transportwagens 15 und des Gestells 14, sondern berechnet auch die horizontale Position des Transportwagens 15 und die vertikale Position des Gestells 14 auf Basis der bis dahin ausgegebenen Steuersignale. Die berechneten Positionen müssen dabei natürlich nicht mit den tatsächlichen Positionen des Transportwagens 15 und des Gestells 14 übereinstimmen. Die programmierbare Steuerung 18 kann anhand von Positionsbestimmungen über den Laser 19 und über die Schalter des Transportwagens 15 die berechneten Positionen mit tatsächlichen Positionen abgleichen.

Das Gestell 14 legt einen Weg 22 (gestrichelte Linie) von Wanne zu Wanne 10 - 13 zurück. Durch Überlagerung der vertikalen und der horizontalen Bewegungskomponenten entsteht eine glatte bogenförmige Bewegung von Wanne zu Wanne 10 - 13. Jeder der drei gezeigten Bögen der Bewegung 22 ist dabei um seinen Scheitelpunkt spiegelsymmetrisch. Dabei wird das Gestell 14 zuerst in die Wanne 10 mit dem Kupferbad getaucht. Die passend vorbereiteten Werkstücke 23 werden hier galvanisch mit Kupfer beschichtet. Anschließend wird das Gestell 14 durch die drei Wasserbäder in den Wannen 11 - 13 mit jeweils zunehmender Reinheit zum Abspülen geführt.

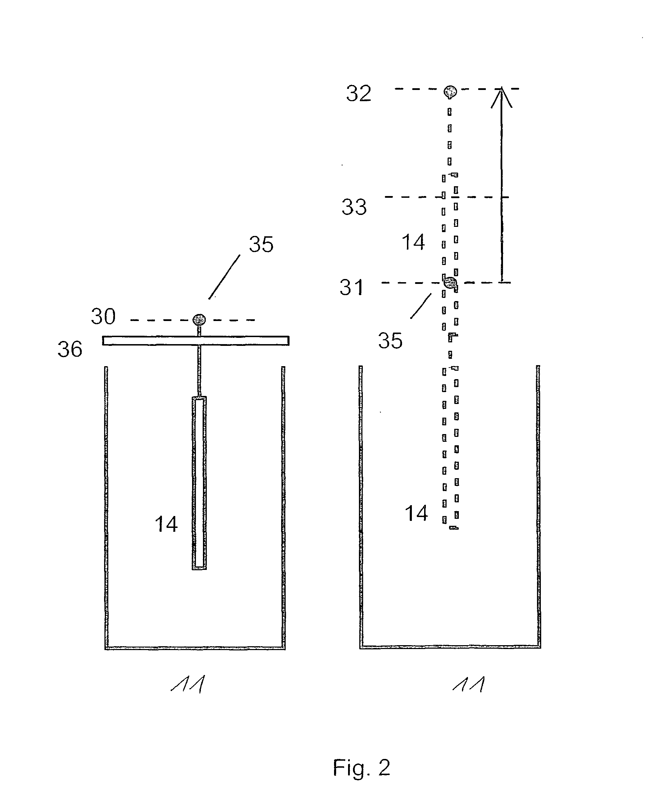

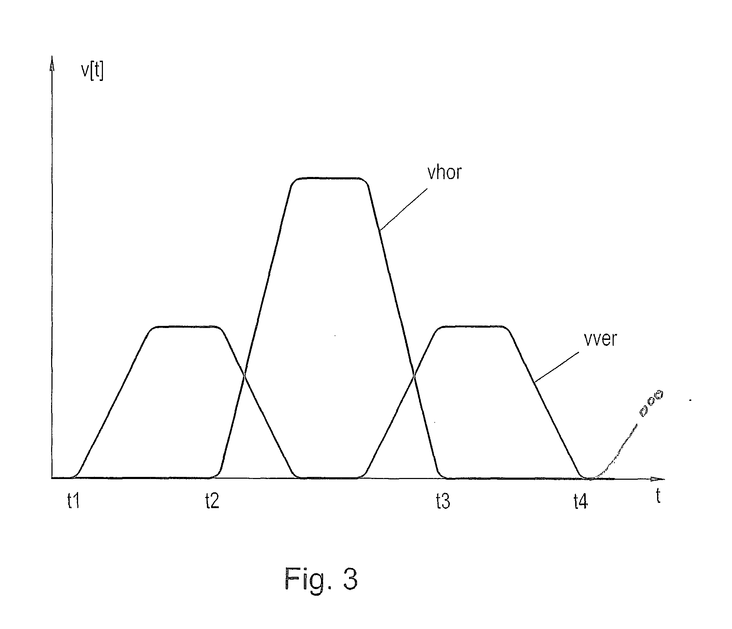

Die linke Seite der Figur 2 zeigt die Wanne 11 der baugleichen Wannen 11 bis 13. Zwischen der Aufhängung 35 und dem Gestell 14 ist quer ein Balken 36 befestigt. Der Balken 36 wird für die Dauer der Beschichtung in der Wanne 10 auf dem Wannenrand der Wanne 10 abgelegt. So kann das Gestell 14 für die Dauer des Prozesses in einer bestimmten Position gehalten werden, ohne dass dies ein Halten der Position mit dem Transportwagen 15 erfordert. Die Wanne 11 enthält jedoch nur ein Wasserbad, in dem die Werkstücke 23 abgespült werden. Es ist nicht erforderlich, die Werkstücke eine gewisse Zeit in dem Bad zu halten, um das Ende eines chemischen oder elektrochemischen Prozesses abzuwarten. Daher wird bei Wanne 11, und dies gilt auch für die Wannen 12 und 13, das Gestell 14 nicht so weit herab gelassen, dass der Balken 36 auf dem Wannenrand abgelegt wird. Das Gestell 14 ist auf der linken Seite der Figur 2 in seiner tiefsten Position für die Wanne 11 gezeigt. Sämtliche Werkstücke 23 sind vollständig in dem Wasser eingetaucht. Die Höhe der Aufhängung 35 wird in der Darstellung durch eine Markierung 30 hervorgehoben. Auf dieser Höhe befindet sich auch der untere Endschalter des Transportwagens 15. Einmal in dieser dargestellten tiefsten Position angekommen, wird das Gestell 14 wieder angehoben (sh. auch Ausführungen zu Figur 3).

Die rechte Hälfte der Figur 2 zeigt das Anheben des Gestells und enthält zur Orientierung drei Höhenmarkierungen 31, 32, 33. Auf Höhe der Markierung 32 befindet sich auch der obere Endabschalter des Transportwagens 15. Zwischen den Höhenmarkierungen 31 und 32 befindet sich die Höhenmarkierung 33. Auf dieser Höhe weist der Transportwagen 15 den Zwischenschalter auf. Der Balken 36 ist in der rechten Hälfte der Figur 2 nicht gezeigt, um die Darstellung einfach zu halten.

Figur 3 zeigt erfindungsgemäße Geschwindigkeits-Zeit-Verläufe, wie sie von der programmierbaren Steuerung 18 vorgegeben werden, nämlich die horizontale Geschwindigkeit vhor des Transportwagens 15 entlang der Verfahrachse 17 und die vertikale Geschwindigkeit vver des Gestells 14. Es ist der Betrag der jeweiligen Größe gegen die Zeit aufgetragen. Der sprachlichen Einfachheit halber werden ab jetzt für diese Geschwindigkeiten die Bezeichnungen "horizontale Geschwindigkeitskomponente vhor" und "vertikale Geschwindigkeitskomponente vver" verwendet.

Auf der Zeitachse sind vier Zeitpunkte t1, t2, t3 und t4 eingezeichnet. Ab dem Zeitpunkt t1 wird das Gestell 14 mit zunehmender Geschwindigkeit vver aus einer der Wannen 10 bis 13 herausgezogen (es schließen sich nicht gezeigte Wannen für weitere galvanotechnische Bäder an die Wanne 13 an, nicht gezeigt). Die Geschwindigkeit vver steigt so lange an, bis sie ein Plateau erreicht und im Anschluss an das Plateau wieder auf den Wert null absinkt. Das Gestell 14 hat dann seine höchste Position erreicht. Bevor die Geschwindigkeit vver jedoch wieder auf den Wert null gesunken ist, beginnt sich der Wagen ab dem Zeitpunkt t2 mit einer Geschwindigkeit vhor in Richtung der nächsten Wanne 11 - 13 (bzw. einer der sich daran anschließenden Wannen) zu bewegen. Ab dem Zeitpunkt t2 nimmt die Geschwindigkeit des Wagens zunächst zu, durchläuft ein Plateau, fällt anschließend wieder ab und erreicht zum Zeitpunkt t3 wieder den Wert null. Zum Zeitpunkt t3 befindet sich der Transportwagen 15 entlang der Verfahrachse 17 genau über der Position, über der das Gestell 14 dann auch seine tiefste Position erreichen soll. Bevor der Transportwagen 15 jedoch diese Position erreicht, also vor dem Zeitpunkt t3, wird das Gestell 14 mit zunächst zunehmender Geschwindigkeit vver in die nächste Wanne 11 - 13 (bzw. eine der folgenden Wannen) abgesenkt. Nach einer Zeitspanne mit zunehmender Geschwindigkeit vver durchläuft diese auch ein Plateau und sinkt bis zum Zeitpunkt t4 wieder auf den Wert null ab. Das Gestell 14 hat zum Zeitpunkt t4 seine tiefstmögliche Position erreicht.

Wird das Gestell in die Wanne 10 abgesenkt (der Transportwagen 15 hat das Gestell zuvor aus einem anderen Teil der Produktionslinie übernommen), so setzt der Balken 36 (der Balken ist gezeigt in Figur 2) in seiner tiefstmöglichen Position auf dem Wannenrand auf.

Im Falle der Wannen 11 bis 13 kehrt sich die Bewegung des Gestells 14 vorher pausenzeitfrei um (Figur 2). Die vertikale Geschwindigkeitskomponente vver wird vor Erreichen des tiefsten Punktes allmählich verkleinert, so dass auch im Fall des Aufsetzens des Balkens 36 auf den Wannenrand keine praktisch relevanten Erschütterungen auftreten.

Beide Geschwindigkeitskomponenten vhor und vver weisen entlang dieses gesamten Zeitverlaufs (sowohl im Falle der Wanne 10, als auch für die anderen Wannen) keinen Knick auf, sie sind also glatt im Sinne von stetig differenzierbar.

Im Falle der Wannen 11 bis 13 weist die vertikale Geschwindigkeitskomponente vver zwischen dem Absenken des Gestells 14 und dem folgenden Anheben keine Pause auf. In der Figur 3 entspricht dies dem unmittelbaren Anhängen des auf den Zeitpunkt t1 folgenden Verlaufes der vertikalen Geschwindigkeitskomponente vver an ihren Verlauf im Anschluss an den Zeitpunkt t4 (s. den aufsteigenden Ast im Anschluss an den Zeitpunkt t4). Insbesondere ist der Verlauf der vertikalen Geschwindigkeitskomponente vver zwischen dem Absenken und dem Anheben des Gestells 14 ebenfalls glatt. Durch die Geschwindigkeitsverringerung vor dem Zeitpunkt t4 und weil die Geschwindigkeit im Anschluss an den Zeitpunkt t4 zwar unmittelbar wieder, aber nicht sprunghaft, ansteigt wird das Gestell weich durch seine tiefste Position geführt.

Die horizontale Geschwindigkeitskomponente vhor ist nur für einen Teil der Zeit, in dem die vertikale Geschwindigkeitskomponente vver größer null ist, selber größer null.

Oben wurde erwähnt, dass die tatsächliche Position des Transportwagens 15 bzw. des Gestells 14 in horizontaler bzw. in vertikaler Richtung von den von der Steuerung berechneten Positionen abweichen kann.

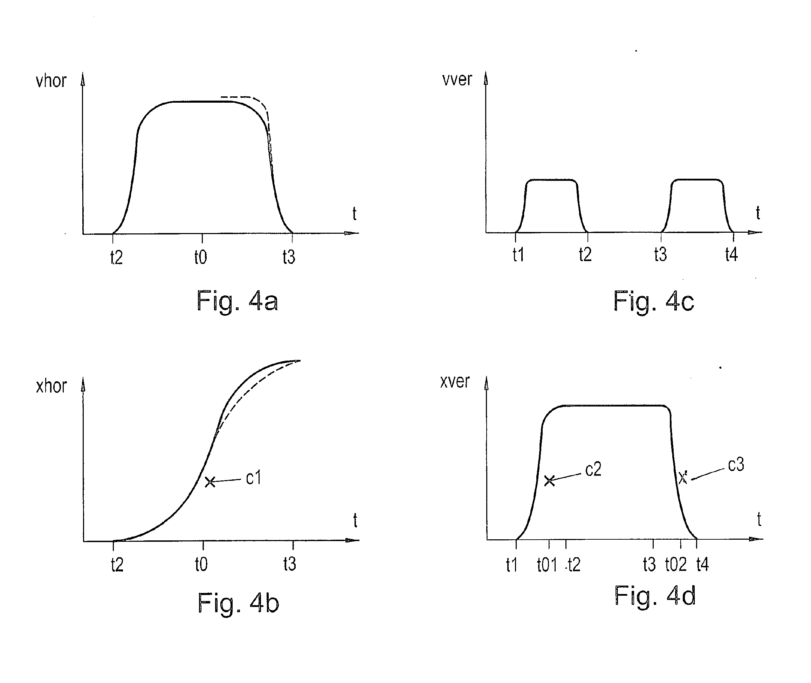

Die horizontale Position des Transportwagens 15 wird als xhor und die vertikale Position des Gestells 14 als xver bezeichnet. Anhand der Figur 4 wird gezeigt, wie hier Messungen der Positionen xhor und xver zur Korrektur der Bewegungssteuerung verwendet werden.

Figur 4a zeigt die programmierte, von der Steuerung 18 zunächst vorzugebende horizontale Geschwindigkeitskomponente vhor aus Figur 3 zwischen den Zeitpunkten t2 und t3 (durchgezogene Linie). Figur 4b zeigt die horizontale Position xhor zwischen den Zeitpunkten t2 und t3, basierend auf einer Berechnung der Steuerung 18, welche wiederum auf der vorzugebenden Geschwindigkeitskomponente vhor (durchgezogene Linie in Figur 4a) basiert. Zum Zeitpunkt t0 wird über den Laser 19 die tatsächliche Position des Transportwagens 15 gemessen. Diese ist in Figur 4b durch ein Kreuz c1 bezeichnet. Der Transportwagen 15 ist bis zum Zeitpunkt 10 also noch nicht so weit gekommen, wie von der programmierbaren Steuerung 18 berechnet. Zur Korrektur wird die Geschwindigkeitskomponente vhor ab dem Zeitpunkt t0 bis zum Zeitpunkt t3 im Vergleich zur ursprünglichen Programmierung multiplikativ erhöht (gestrichelte Linie in Figur 4a). Im Falle einer solchen Korrektur ist der Geschwindigkeits-Zeit-Zusammenhang hier ausnahmsweise nicht glatt. In Figur 4b ist auch die von der Steuerung 18 berechnete Position xhor auf Basis der Korrektur eingezeichnet (gestrichelte Linie). Man erkennt, dass die Korrektur so gewählt ist, dass der korrigierte berechnete Verlauf mit dem ursprünglich berechneten Verlauf zum Zeitpunkt t3 zusammenfällt.

Die Korrektur der horizontalen Geschwindigkeitskomponente vhor beginnnt mit dem Zeitpunkt t0, ab dem gemäß der programmierten horizontalen Geschwindigkeitskomponente vhor mit dem Abbremsen begonnen wird.

Die Figuren 4c und 4d zeigen sinngemäß den gleichen Zusammenhang für die vertikale Geschwindigkeitskomponente vver. Zur Vereinfachung der Darstellung sind jedoch lediglich die bereits korrigierte vertikale Geschwindigkeitskomponente vver und die ebenfalls bereits korrigierte berechnete vertikale Position xver jeweils als durchgezogene Linie eingezeichnet.

Die Messung der vertikalen Position xver und die Durchführung der Korrektur der vertikalen Geschwindigkeitskomponente vver findet zu den Zeitpunkten t01 und t02 statt. Der Zeitpunkt t01 liegt zwischen den Zeitpunkten t1 und t2 und der Zeitpunkt t02 liegt zwischen den Zeitpunkten t3 und t4. Die Zeitpunkte t01 und t02 sind durch die Position des Zwischenschalters in dem Transportwagen 15 bestimmt. Die Position des Zwischenschalters und damit die Zeitpunkte t01 und t02 sind so gewählt, dass sie jeweils am berechneten Beginn eines Abbremsens der vertikalen Geschwindigkeitskomponente vver liegen. Zum Zeitpunkt t01 hat die Aufhängung 35 des Gestells 14 den Zwischenschalter an dem Transportwagen 15 passiert. Eine Messung c2 (linkes Kreuz in Figur 4d) zeigt, dass der Zwischenschalter später erreicht worden ist als zuvor berechnet. Eine weitere Messung c3 (rechtes Kreuz in Figur 4d) zeigt, dass der Zwischenschalter wiederum später erreicht wurde als ursprünglich (aber bereits die Korrektur vom Zeipunkt t01 enthaltend) berechnet, wobei die Abweichung diesmal kleiner ist.

Die Geschwindigkeitsänderung im Falle einer Korrektur ist eine lineare Funktion der Abweichung der berechneten Position von der tatsächlichen Position in horizontaler Richtung bzw. von der zeitlichen Differenz zwischen dem erwarteten Erreichen des Zwischenschalters und dem tatsächlichen Erreichen des Zwischenschalters der Aufhängung 35 in vertikaler Richtung. Für die horizontale Richtung gilt, dass die entsprechende Geschwindigkeitsänderung proportional zu der Abweichung der berechneten Position von der tatsächlichen Position ist, der Proportionalitätsfaktor ist ε1. Für die vertikale Geschwindigkeitskomponente gilt, dass diese proportional zur zeitlichen Differenz zwischen dem berechneten Zeitpunkt, zu dem die Aufhängung 35 den Zwischenschalter passiert, und dem entsprechenden tatsächlichen Zeitpunkt ist. Hier ist die Proportionalitätskonstante ε2. Die exakten Zahlenwerte für die Proportionalitätsfaktoren ε1 und ε2 hängen stark von den Eigenschaften der galvanotechnischen Anlage 1 ab. Hier ist ε1 = -0,05 und ε2 ist ebenfalls = -0,05 (angegeben in 1/s). Das negative Vorzeichen ergibt sich daraus, dass der Abweichung entgegengewirkt werden soll.

## Patentansprüche

1. Verfahren zur galvanotechnischen Behandlung von Werkstücken (23) mit einer galvanotechnischen Anlage (1), welche aufweist:
Wannen (10-13) für galvanotechnische Bäder,
Gestelle (14) zur Aufnahme der Werkstücke (23)
und eine Fördereinrichtung (15) zur Bewegung der Gestelle (14) mit den Werkstücken (23) in die und aus den Bädern mit vertikalen Bewegungskomponenten (wer),
wobei, wenn die Gestelle (14) abgesetzt werden, diese vor dem Absetzen zur Begrenzung des Schlags etwas abgebremst werden,
**dadurch gekennzeichnet, dass** die Gestelle (14) mit der Fördereinrichtung (15) in eines der Bäder mit jeweils einer vertikalen Bewegungskomponente (wer) der Gestelle abgesenkt und pausenzeitfrei wieder aus dem Bad angehoben werden,
nämlich mit einer vernachlässigbaren Pausenzeit von maximal 10 % der Zeit zwischen dem Beginn des Absenkens der Gestelle (14) in das Bad und dem Ende des Anhebens aus diesem Bad,
wobei die Gestelle (14) lediglich vertikal bewegt werden, so lange sich ein Teil des jeweiligen Gestells (14) in dem Bad befindet.

2. Verfahren nach Anspruch 1, bei dem sämtliche Werkstücke (23) an den Gestellen (14) vollständig in das Bad eingetaucht werden, die Gestelle jedoch nur soweit, wie dafür erforderlich.

3. Verfahren nach einem der vorangehenden Ansprüche, bei dem das Bad ein Wasserbad zum Spülen der Werkstücke (23) ist.

4. Verfahren nach einem der vorangehenden Ansprüche, bei dem die Gestelle (14) mit jeweils einem Balken (36) zum Absetzen auf einer Absetzvorrichtung verbunden sind und die Gestelle (14) bei dem Absenken in das Bad und dem Anheben aus dem Bad umkehren, bevor der jeweilige Balken auf der Absetzvorrichtung abgesetzt wird.

5. Verfahren nach einem der vorangehenden Ansprüche, bei dem die vertikalen Geschwindigkeitskomponenten (wer) zwischen dem Absenken der Gestelle (14) in das Bad und dem Anheben aus dem Bad glatt sind.

6. Verfahren nach einem der vorangehenden Ansprüche, bei dem die Höhe, in der die Gestelle (14) zwischen dem Absenken in das Bad und dem Anheben aus dem Bad umkehren, basierend auf ausgegebenen Steuersignalen einer Steuerung (18) berechnet wird.

7. Verfahren nach einem der vorangehenden Ansprüche, bei dem die Höhe, in der die Gestelle (14) zwischen dem Absenken in das Bad und dem Anheben aus dem Bad umkehren, über einen Zwischenschalter in der Fördereinrichtung (15) bestimmt wird.

8. Verfahren nach einem der vorangehenden Ansprüche, bei dem die Fördereinrichtung (15) auch zur Bewegung der Gestelle (14) mit den Werkstücken (23) in die und aus den Bädern und von einem Bad zum nächsten mit horizontalen und vertikalen Bewegungskomponenten (vhor, wer) ausgelegt ist,
wobei beim Absenken der Gestelle (14) in die Bäder und beim Anheben aus den Bädern jedes der Gestelle (14) in bestimmten jeweiligen Zeitbereichen gleichzeitig horizontal (vhor) und vertikal (wer) bewegt wird.

9. Galvanotechnische Anlage (1) zur galvanotechnischen Behandlung von Werkstücken (23), welche aufweist:
Wannen (10 - 13) für galvanotechnische Bäder,
Gestelle (14) zur Aufnahme der Werkstücke (23),
eine Fördereinrichtung (15) zur Bewegung der Gestelle (14) mit den Werkstücken (23) in die und aus den Bädern mit vertikalen Bewegungskomponenten (vver), und eine Steuerung (18) zum Steuern der Fördereinrichtung (15) nach einem Programm,
wobei das Programm der Steuerung (18) so ausgelegt ist, dass, wenn die Gestelle (14) abgesetzt werden, diese vor dem Absetzen zur Begrenzung des Schlags etwas abgebremst werden,
**dadurch gekennzeichnet, dass** das Programm der Steuerung (18) so ausgelegt ist, dass die Gestelle (14) mit der Fördereinrichtung (15) in eines der Bäder mit jeweils einer vertikalen Bewegungskomponenten (vver) der Gestelle abgesenkt und pausenzeitfrei wieder aus dem Bad angehoben werden,
nämlich mit einer vernachlässigbaren Pausenzeit von maximal 10 % der Zeit zwischen dem Beginn des Absenkens der Gestelle (14) in das Bad und dem Ende des Anhebens aus diesem Bad,
wobei die Gestelle (14) lediglich vertikal bewegt werden, so lange sich ein Teil des jeweiligen Gestells (14) in dem Bad befindet.

10. Galvanotechnische Anlage nach Anspruch 9. bei der das Programm ausgelegt ist zur Durchführung eines Verfahrens nach einem der Ansprüche 2 bis 8.

## Claims

1. A method for a galvanic treatment of work pieces (23) by a galvanic installation (1), which comprises:
tanks (10 - 13) for galvanic baths,
stands (14) for receiving said work pieces (23) and a conveyor (15) for moving said stands (14) with said work pieces (23) into and out of said baths, with vertical motional components (vver),
wherein said stands (14) are, when being deposited, slowed down slightly before said deposition to limit a shock,
**characterized in that** said stands (14) are lowered by said conveyor (15) into one of said baths, with a vertical motional component (vver) of said stands, respectively, and are relifted out of said bath pause-time-free in-between, namely with a negligible pause-time of up to a maximum of 10 % of a time between a beginning of said lowering of said stands (14) into said bath and an end of said lifting out of said bath,
wherein said stands (14) are only moved vertically, as long as a part of a respective stand (14) is inside said bath.

2. The method according to claim 1, wherein all work pieces (23) at said stands (14) are completely immersed into said bath, but said stands are only immersed as much as required for this purpose

3. The method according to one of the preceding claims, wherein said bath is a water bath for rinsing said work pieces (23).

4. The method according to one of the preceding claims, wherein said stands (14) are respectively connected to a beam (36) for depositing on a deposition device, and said stands (14) reverse during said lowering into said bath and said lifting out of said bath, before a respective beam is deposited on said deposition device.

5. The method according to one of the preceding claims, wherein vertical velocity components (vver) between said lowering of said stands (14) into said bath and said lifting out of said bath are smooth.

6. The method according to one of the preceding claims, wherein a height, at which said stands (14) reverse between said lowering into said bath and said lifting out of said bath, is calculated based on outputted control signals of a controlling means (18).

7. The method according to one of the preceding claims, wherein a height, at which said stands (14) reverse between said lowering into said bath and said lifting out of said bath, is preset by an intermediate switch in said conveyor (15).

8. The method according to one of the preceding claims, wherein said conveyor (15) is also adapted for moving said stands (14) with said work pieces (23) into and out of said baths and from a bath to a next one, with horizontal and vertical motional components (vhor, vver),
wherein each of said stands (14) is simultaneously moved horizontally (vhor) and vertically (vver) in determined respective time periods, when lowering said stands (14) into said baths and lifting said stands (14) out of said baths.

9. A galvanic installation (1) for a galvanic treatment of work pieces (23), which comprises:
tanks (10 - 13) for galvanic baths,
stands (14) for receiving said work pieces (23),
a conveyor (15) for moving said stands (14) with said work pieces (23) into and out of said bath, with vertical motional components (vver),
and a controlling means (18) for controlling said conveyor (15) according to a program,
wherein said program of said controlling means (18) is adapted for slightly slowing down said stands (14), when they are deposited, before said deposition to limit a shock,
**characterized in that** said program of said controlling means (18) is adapted for lowering said stands (14) by said conveyor (15) into said bath and relifting said stands (14) by said conveyor (15) out of said bath, with a vertical motional component (vver) of said stands, respectively, pause-time-free in-between,
namely with a negligible pause-time of up to a maximum of 10 % of a time between a beginning of said lowering of said stands (14) into said bath and an end of said lifting out of said bath,
wherein said stands are only moved vertically, as long as a part of a respective stand is inside said bath.

10. The galvanic installation according to claim 9, wherein said program is adapted for carrying out a method according to one of the claims 2 to 8.

## Revendications

1. Procédé pour le traitement galvanique de pièces d'oeuvre (23) avec une installation galvanique (1), laquelle comporte :
des cuves (10 - 13) pour les bains galvaniques,
des châssis (14) pour recevoir les pièces d'oeuvre (23) et un convoyeur (15) pour le déplacement des châssis (14) avec les pièces d'oeuvre (23) dans les bains et hors des bains, avec des composantes de mouvement verticales (vver),
lorsque les châssis (14) sont reposés, ces derniers étant quelque peu freinés avant la dépose, pour limiter de choc,
**caractérisé en ce que** les châssis (14) avec le convoyeur (15) sont descendus dans l'un des bains avec chaque fois une composante de mouvement verticale (vver) des châssis et remontés hors du bain sans temps de pause, à savoir avec un temps de pause négligeable d'un maximum de 10 % entre le début de la descente des châssis (14) dans le bain et la fin de la remontée hors dudit bain,
les châssis (14) étant uniquement déplacés à la verticale aussi longtemps qu'une partie du châssis (14) concerné se trouve dans le bain.

2. Procédé selon la revendication 1, dans lequel toutes les pièces d'oeuvre (23) sur les châssis (14) sont entièrement immergées dans le bain, alors que les châssis ne le sont que dans la mesure requise à cet effet.

3. Procédé selon l'une quelconque des revendications précédentes, dans lequel le bain est un bain d'eau pour le rinçage des pièces d'oeuvre (23).

4. Procédé selon l'une quelconque des revendications précédentes, dans lequel les châssis (14) sont reliés avec chaque fois une barre (36) pour la dépose sur un dispositif de dépose et à la descente dans le bain et à la remontée hors du bain, les châssis (14) se retournent avant que la barre respective est déposée sur le dispositif de dépose.

5. Procédé selon l'une quelconque des revendications précédentes, dans lequel les composantes de vitesse verticales (vver) entre la descente des châssis (14) dans le bain et la remontée hors du bain sont lisses.

6. Procédé selon l'une quelconque des revendications précédentes, dans lequel la hauteur, à laquelle les châssis (14) se retournent entre la descente dans le bain et la remontée hors du bain est calculée sur la base de signaux de commande délivrés par une commande (18).

7. Procédé selon l'une quelconque des revendications précédentes, dans lequel la hauteur, à laquelle les châssis (14) se retournent entre la descente dans le bain et la remontée hors du bain est déterminée par l'intermédiaire d'un interrupteur intermédiaire dans le convoyeur (15).

8. Procédé selon l'une quelconque des revendications précédentes, dans lequel le convoyeur (15) est également conçu pour déplacer les châssis (14) avec les pièces d'oeuvre (23) dans les bains et hors des bains et d'un bain au suivant, avec des composantes de mouvement horizontales et verticales (vhor, vver), à la descente des châssis (14) dans les bains et à la remontée hors des bains, chacun des châssis (14) étant déplacé simultanément à l'horizontale (vhor) et à la verticale (vver) dans des plages de temps respectives déterminées.

9. Installation galvanique (1) pour le traitement galvanique de pièces d'oeuvre (23), laquelle comporte :
des cuves (10-13) pour les bains galvaniques,
des châssis (14) pour recevoir les pièces d'oeuvre (23) un convoyeur (15) pour le déplacement des châssis (14) avec les pièces d'oeuvre (23) dans les bains et hors des bains, avec des composantes de mouvement verticales (vver),
et une commande (18) pour piloter le convoyeur (15) selon un programme,
le programme de la commande (18) étant conçu de telle sorte que, lorsque les châssis (14) sont déposés, ils sont quelque peu freinés avant la dépose, pour limiter le choc,
**caractérisée en ce que** le programme de la commande (18) est conçu de telle sorte que les châssis (14) avec le convoyeur (15) sont descendus dans l'un des bains avec chaque fois une composante de mouvement verticale (vver) des châssis et remontés hors du bain sans temps de pause, à savoir avec un temps de pause négligeable d'un maximum de 10 % entre le début de la descente des châssis (14) dans le bain et la fin de la remontée hors dudit bain,
les châssis (14) étant uniquement déplacés à la verticale aussi longtemps qu'une partie du châssis (14) concerné se trouve dans le bain.

10. Installation galvanique selon la revendication 9, dans laquelle le programme est conçu pour réaliser un procédé selon l'une quelconque des revendications 2 à 8.
